# EUROPÄISCHE PATENTSCHRIFT

(11) **EP 1 717 208 B1**
(45) Veröffentlichungstag und Bekanntmachung des Hinweises auf die Patenterteilung: **26.06.2013**
(21) Anmeldenummer: 05009339.2
(22) Anmeldetag: 28.04.2005
(51) Int. Cl.: C02F 3/08

(54) **Vorrichtung zur Fluidbehandlung, insbesondere Abwasserbehandlung, mit einem Scheibenstapel**
Device for fluid treatment, in particular for waste water treatment, with a stack of discs
Dispositif de traitement de fluides, en particulier de traitement des eaux usées, avec une pile de disques

(43) Veröffentlichungstag der Anmeldung: 02.11.2006
(73) Patentinhaber: Grundfos Management A/S, 8850 Bjerringbro (DK)
(72) Erfinder: Madsen, Steffen, 8950 Orsted (DK)
(74) Vertreter: Vollmann, Heiko

(56) Entgegenhaltungen:
- EP-A- 0 222 937
- WO-A-02/094724
- US-A- 4 162 195
- US-A- 5 855 799

## Beschreibung

Die Erfindung betrifft eine Vorrichtung zur Fluidbehandlung, insbesondere zur Abwasserbehandlung gemäß den im Oberbegriff des Anspruchs 1 angegebenen Merkmalen.

Eine derartige Vorrichtungen zur Abwasserbehandlung, bei der in einem geschlossenen Gehäuse mindest ein vom Abwasser durchströmbarer Scheibenstapel angeordnet ist und bei der das Abwasser mittels einer Umwälzpumpe umgewälzt wird, ist beispielsweise aus WO 02/094724 A1 bekannt. Dort sind innerhalb eines Gehäuses zwei miteinander kämmende Scheibenstapel angeordnet, die mittels eines Antriebsmotors relativ zueinander bewegbar sind um den auf den flächigen Seiten der Scheiben wachsenden biologischen Belag auf ein gewünschtes Maß abzutragen. Die Scheibenstapel werden von Abwasser radial durchströmt, das durch den an den Scheiben anhaftenden biologischen Belag in Form von Mikroorganismen dabei gereinigt wird, d. h. die im Abwasser befindlichen Stoffe biologisch abgebaut werden. Um das Wasser durch diesen biologischen Filter hindurchzufördern ist eine Umwälzpumpe in Form einer Kreiselpumpe vorgesehen, mit welcher das Abwasser innerhalb des biologischen Filters umwälzbar sowie in diesem und aus diesem förderbar ist.

Bei dieser bekannten Vorrichtung sind die Scheibenstapel innerhalb eines geschlossenen Gehäuses angeordnet, wobei zu einer Seite eine Antriebswelle herausgeführt ist, über die ein Antrieb eines Scheibenstapels erfolgt. Zur anderen Seite sind Rohranschlüsse vorgesehen, an welche eine Umwälzpumpe anzuschließen ist.

Aus US-A-4,162,195 ist eine Vorrichtung zur Fluidbehandlung bekannt, bei welcher ein Scheibenstapel in einem geschlossenen Gehäuse gegenüber einem im Gehäuse feststehenden Scheibenstapel rotiert wird, wobei die Strömungsführung so ist, dass die Scheiben aufeinander folgend umströmt werden. Hierzu ist eine Umwälzpumpe vorgesehen, die extern angeordnet und über eine Rohrverbindung mit dem Gehäuse verbunden ist.

Eine ähnliche Vorrichtung ist aus EP-A-0222937 bekannt, bei dieser Vorrichtung ist ebenfalls ein drehbar angetriebener Scheibenstapel innerhalb eines geschlossenen Gehäuses vorgesehen, wobei die Scheiben gruppenweise umströmt werden. Um diese Durchströmung zu gewährleisten, ist eine externe Umwälzpumpe vorgesehen, welche über entsprechende Rohrverbindungen mit dem Gehäuseinneren verbunden ist.

Nachteilig bei den dort beschriebenen Konstruktionen ist, dass sie nicht nur kostenintensiv im Aufbau sind sondern darüber hinaus auch eine stationäre Montage erfordern, da neben dem eigentlichen Biofilter auch noch das Umwälzpumpenaggregat sowie die zugehörige Verrohrung vorzusehen sind, was platz- und bauaufwändig ist.

Vor diesem Hintergrund liegt, ausgehend vom Stand der Technik nach EP-A-0222937 der Erfindung die Aufgabe zugrunde, eine gattungsgemäße Vorrichtung so auszubilden, dass sie möglichst platzsparend aufgebaut und kostengünstig und kompakt ausgebildet werden kann.

Diese Aufgabe wird gemäß der Erfindung durch die in Anspruch 1 angegebenen Merkmale gelöst. Vorteilhafte Ausgestaltungen der Erfindung sind in den Unteransprüchen, der nachfolgenden Beschreibung und der Zeichnung angegeben.

Die efindungsgemäße Vorrichtung zur Fluidbehandlung, insbesondere Abwasserbehandlung weist ein geschlossenes Gehäuse auf, in dem mindestens ein vom Abwasser durchströmbarer Scheibenstapel angeordnet ist, wobei das Gehäuse mit dem darin befindlichen Scheibenstapel und die Umwälzpumpe, welche für die Flüssigkeitsumwälzung innerhalb des Gehäuse sorgt, eine bauliche Einheit bilden.

Grundgedanke der vorliegenden Erfindung ist es also, auf eine gesonderte Pumpe und damit erforderliche Verrohrung zwischen dem biologischen Filter und der Pumpe völlig zu verzichten und stattdessen Umwälzpumpe und Gehäuse als bauliche Einheit auszubilden.

Dabei ist gemäß der Erfindung zumindest ein Teil der Pumpe integraler Bestandteil des Gehäuses um auf diese Weise einerseits eine raumsparende Konstruktion bereitzustellen und andererseits die Herstellungs- und Montagekosten gegenüber bekannter Vorrichtungen zu senken.

Dabei ist die Umwälzpumpe Teil des Gehäuses, nämlich eines stirnseitigen Deckels.

Eine besonders kostengünstige Gehäusebauform ergibt sich gemäß der Erfindung dadurch, dass das Gehäuse rohrförmig ausgebildet ist, da dann der rohrförmige Teil durch ein Rohr oder einen Rohrabschnitt gebildet werden kann und lediglich endseitig Deckel oder andere verschließende Querwände vorzusehen sind. Grundsätzlich kann zwar auch ein rohrförmiges Gehäuse formgebend, z. B. als Gussteil hergestellt werden, doch ist der Aufbau aus einem abgelängten Rohr in Verbindung mit endseitigen Deckeln bzw. einer Querwand häufig günstiger, da mit dieser Bauform auch Scheibenstapel unterschiedlicher Größe eingesetzt werden können ohne hierfür gesonderte Gehäusevarianten vorsehen zu müssen. Gemäß der Erfindung ist bei dem rohrförmig ausgebildeten Gehäuse die Umwälzpumpe in oder an einer Querwand angeordnet, die durch einen endseitigen Deckel gebildet wird. Hierdurch kann die Umwälzpumpe platzsparend zumindest teilweise in das Gehäuse integriert werden.

Erfindungsgemäß wird diese Querwand durch einen das Gehäuse stirnseitig abschließenden Deckel gebildet, was den Vorteil hat, dass durch den Deckel einerseits das rohrförmige Gehäuse endseitig abgeschlossen werden kann und andererseits die am bzw. im Deckel festgelegte Pumpe so angeordnet sein kann, dass typischerweise der elektrische Antriebsteil außerhalb und der hydraulische Abtriebsteil innerhalb des Deckels bzw. des Gehäuses angeordnet ist. Hierdurch kann auf eine Verrohrung im Idealfall völlig verzichtet werden und die Umwälzpumpe in nahezu idealer Weise in die Vorrichtung integriert werden.

Ein weiterer Vorteil der Deckelanordnung ist, dass nach Abnehmen des Deckels vom Gehäuse zum einen die Pumpe gut zugänglich ist und zum anderen auch die Scheibenstapel innerhalb des Gehäuses zugänglich sind. Üblicherweise kämmen zwei oder mehr Scheibenstapel miteinander, beispielsweise indem ein oder mehrere Scheibenstapel feststehen und der andere oder mehrere Scheibenstapel hierzu relativ bewegbar sind. In jedem Falle ist ein Antrieb zur Rotation mindestens eines Scheibenstapels erforderlich. Dieser Antrieb weist vorteilhaft einen außerhalb des Gehäuses angeordneten Antriebsmotors auf, so dass die elektrischen Bauteile des Motors nicht gegenüber der im Gehäuse befindlichen Flüssigkeit abzudichten und zu isolieren sind. Dabei ist der Motor vorteilhaft unmittelbar oder mittelbar am Deckel angeordnet, wobei die Antriebswelle abgedichtet durch den Deckel durchgeführt ist, in dem die Umwälzpumpe angeordnet ist. Eine solche Anordnung hat den Vorteil, dass alle elektrischen Anschlüsse der Vorrichtung an einer Seite angeordnet sind und zudem das übrige Gehäuse vergleichsweise kostengünstig und einfach ausgestaltet sein kann.

Erfindüngsgemäβ ist an diesem, das rohrförmige Gehäuse zu einer Seite abschließenden Deckel der die Pumpe antreibende Motor angeordnet. Diese Anordnung hat den Vorteil, dass der Motor nicht mit der innerhalb des Gehäuses befindlichen Flüssigkeit in Kontakt kommt und alle elektrischen Anschlüsse von außen frei zugänglich sind.

Besonders vorteilhaft ist es, wenn der Deckel nicht nur zur Befestigung der Umwälzpumpe dient, sondern gemäß der Erfindung der Deckel zumindest auch einen Teil des Pumpengehäuses bildet, da auf diese Weise ein ohnehin erforderliches Bauteil sowohl Funktionen für die Pumpe als auch für das Gehäuse der Vorrichtung übernimmt.

Vorteilhaft ist der Deckel gemäß der Erfindung mehrteilig ausgebildet, und weist einen das Gehäuse nach außen abschießenden äußeren Deckelteil sowie einen den Deckel nach innen abschließenden inneren Deckelteil auf, die miteinander vorzugsweise lösbar verbunden sind. Durch diesen mehrteiligen Aufbau können dem Deckel weitere pumpenseitige Funktionen zugeordnet werden. Durch den mehrteiligen Aufbau können darüber hinaus bei geeigneter Konstruktion hinterschneidungsfreie Bauteile eingesetzt werden, die kostengünstig herstellbar sind.

Vorteilhaft wird dabei der Deckelinnenteil so ausgebildet, dass er den Saugmund der Pumpe bildet. Dabei kann bei geeigneter Ausbildung der Vorrichtung sich innerhalb des Gehäuses an den Saugmund der Pumpe unmittelbar beispielsweise eine zentraler, durch die Scheibenstapel führender Kanal anschließen, so dass sehr direkte und günstige Strömungsverhältnisse erzielt werden.

Von Vorteil ist es, wenn gemäß der Erfindung zwischen dem Deckelinnenteil und dem Deckelaußenteil ein Zwischenteil vorgesehen ist, welches ein Kreiselrad der Pumpe umgibt und in dem der druckseitige Strömungskanal der Pumpe liegt. Durch dieses Zwischenteil wird das eigentliche Pumpengehäuse insbesondere der hydraulisch wirksame Teil des Pumpengehäuses gebildet. Das Vorsehen eines solchen Zwischenteils ist fertigungstechnisch besonders günstig, da dann bei geeigneter Konstruktion sämtliche Deckelbauteile als vergleichsweise einfach und gegebenenfalls auch hinterschneidungsfrei hergestellt werden können. Es können jedoch auch Bauteile zusammengefasst werden. So kann es vorteilhaft sein, den Deckelinnenteil und den Zwischenteil einstückig als ein gemeinsames Bauteil auszubilden, das quasi das gesamte Pumpengehäuse vom Saugmund bis zum druckseitigen Ausgang bildet.

Vorteilhaft weist der Zwischenteil einen Ejektor auf, also eine Strahlpumpe, mit welcher dem druckseitigen Kanal der Pumpe Gas zumischbar ist. Derartiges Gas ist typischerweise bei Vorrichtungen dieser Art erforderlich um den biologisch/chemischen Prozess zu steuern bzw. in Gang zu halten. Durch den Ejektor kann ein solches Gas, typischerweise ein sauerstoffhaltiges Gas, ohne Fremdenergie dem Flüssigkeitssystem zugeführt werden.

Vorteilhaft ist es, wenn der Ejektor einen ersten durch den Deckelinnenteil verlaufenden und in das Gehäuse führenden Gaskanal und vorzugsweise einen zweiten durch den Deckelaußenteil verlaufenden und nach außen außerhalb des Gehäuse führenden Gaskanals aufweist. Dann ist nämlich mittels dieses Gaskanals der obere Deckelinnenteil mit dem Gehäuseinneren verbunden, wo auch während des Betriebs der Vorrichtung eine Gasblase besteht. Zugleich ist über den zweiten Kanal von außerhalb des Gehäuses eine Verbindung zu einem Gasreservoir, z. B. einer Druckgasflasche gebildet, so dass je nach Prozesssteuerung und Erfordernissen, Gas aus dem Reservoir oder Gas aus dem Gehäuse dem Flüssigkeitsstrom zugemischt wird.

Um zu erreichen, dass die Gasblase stets in dem Bereich angeordnet ist, welche über den Kanal im Deckelinnenteil mit dem Ejektor verbunden ist, ist das Gehäuse mit seiner Mittellängsachse etwa horizontal angeordnet, wobei der zum Ejektor führende und der durch den Deckelinnenteil verlaufende Kanal oben im Gehäuse mündet.

Vorteilhaft weist der Deckelinnenteil einen weiten Kanal auf, welcher das Gehäuseinnere mit der Druckseite der Umwälzpumpe verbindet, wobei dieser Kanal innerhalb des Gehäuses unter dem zum Ejektor führenden Kanal und mit Abstand vorzugsweise unter und/oder neben dem Saugmund der Pumpe mündet. Bei einer solchen Anordnung können über den Saugmund der Pumpe zentral Flüssigkeit aus der Mitte der Scheibenstapel abgezogen und durch den Druckkanal wieder in das Gehäuse eingebracht werden, so dass diese zu behandelnde Flüssigkeit quasi radial von außen nach innen durch den oder die Scheibenstapel strömt. Dabei ist durch die Anordnung der Kanäle zueinander sichergestellt, dass der zum Ejektor führende Kanal stets im Bereich der Gasblase und die anderen beiden Kanäle (Saug- und Druckkanal der Pumpe) unterhalb des Flüssigkeitsspiegels innerhalb des Gehäuses münden.

Der erfindungsgemäße Deckel, der vorzugsweise aus zwei, drei oder mehr Bauteilen gebildet sein kann, kann kostengünstig als Frästeil oder bei größeren Stückzahlen auch als kernlos herzustellendes Gussteil gefertigt werden.

Vorteilhaft ist die Kanalanordnung in Strömungsrichtung der Pumpe so, dass im Druckkanal ein Auslasskanal für Gas aus dem Gehäuse und dahinter ein Einlasskanal für Gas aus dem Reservoir, beide jedoch in Strömungsrichtung vor dem Ejektor münden.

Die Erfindung ist nachfolgend anhand eines in der Zeichnung dargestellten Ausführungsbeispiels näher erläutert. Es zeigen:
- Fig. 1: eine Teil der erfindungsgemäßen Vorrichtung in stark vereinfachter Darstellung im Längsschnitt,
- Fig. 2: den anderen Teil der Vorrichtung in Darstellung nach Fig. 2 und
- Fig. 3: einen Schnitt durch den Deckel längs der Schnittlinie lll-lll in Fig. 1.

Die anhand der Figuren dargestellte Abwasserbehandlungsvorrichtung weist ein im Wesentlichen zylindrisches Gehäuse 1 auf, das aus einem Rohrabschnitt 2 mit endseitigen Deckeln 3 und 4 gebildet ist, welche den Rohrabschnitt 2 stirnseitig abschließen.

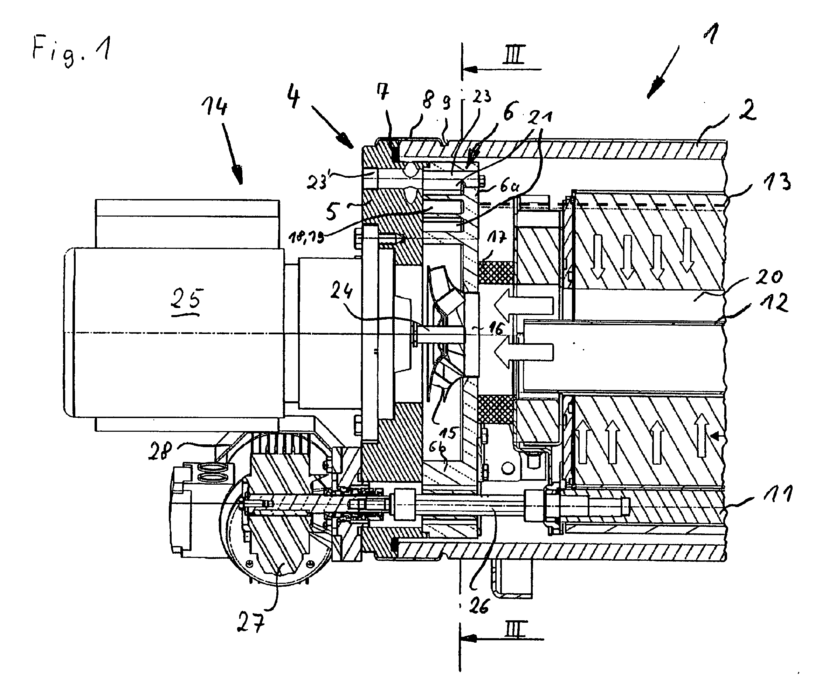

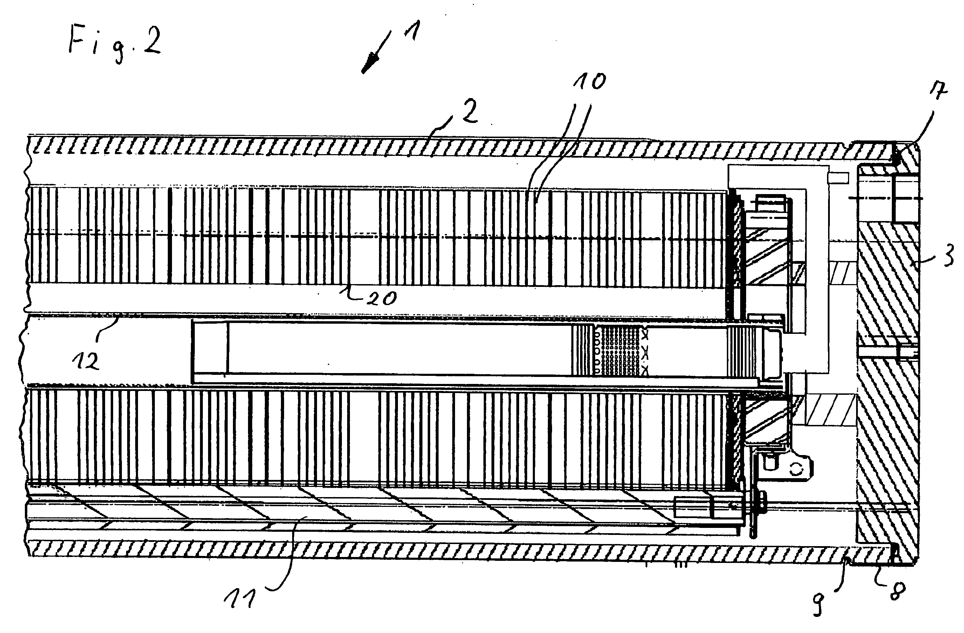

Während der in Fig. 2 dargestellte, den Rohrabschnitt 2 rechtsseitig abschließende scheibenförmige Deckel 3 einstückig und abgestuft ausgebildet ist, so dass er mit einem Teil in den Rohrabschnitt 2 eingreift und mit einem anderen Teil stirnseitig auf diesem aufliegt, ist der in Fig. 1 dargestellte, in der Zeichnung den Rohrabschnitt 2 linksseitig abschließende Deckel 4 mehrteilig aufgebaut.

Der Deckel 4 besteht aus einem den eigentlichen Deckel bildenden äußeren scheibenförmigen Deckelteil (Deckelaußenteil) 5 sowie einem ebenfalls scheibenförmigen Zwischen- und Deckelinnenteil 6, der lösbar mit dem Deckelaußenteil 5 verbunden ist. Der Deckelaußenteil 5 weist ebenso wie der Deckel 3 einen in den Rohrabschnitt 2 eingreifenden Abschnitt sowie einen stirnseitig an diesem stirnseitig anliegenden Abschnitt auf, ist also abgestuft ausgebildet und mit einer Dichtung 7 versehen, wie sie auch am Deckel 3 vorgesehen ist und die den jeweiligen Deckel 3 bzw. 4 gegenüber dem Rohrabschnitt 2 abdichtet.

Die Befestigung der Deckel 3, 4 am Rohrabschnitt 2 erfolgt mittels eines umlaufenden Spannbandes 8, welches als flaches Band mit zwei radial nach innen weisenden Flanken ausgebildet ist. Von diesen Flanken greift die den Rohrabschnitt 2 übergreifende in eine Nut 9 am Ende des Rohrabschnitts 2 ein, während die andere den Deckel 3 bzw. 4 an der Außenseite übergreift und diesen somit formschlüssig am Rohrabschnitt 2 festlegt. Das Spannband 8 ist mit einer an sich bekannten Spannvorrichtung ausgestattet, welche in einer ersten geöffneten Stellung das Band so weit verlängert, dass die Flanke über das freie Ende des Rohrabschnitts 2 geschoben werden kann und in einer zweiten geschlossenen Stellung dieses eng anliegend am Außenumfang des Rohrabschnittes 2 sowie des zugehörigen Deckels 3, 4 spannt, so dass dieses kraft- und formschlüssig festliegt.

Innerhalb des Gehäuses 1 ist ein Scheibenstapel angeordnet, der aus einer Vielzahl mit Abstand nebeneinander angeordneter Scheiben 10 gebildet ist. Der Scheibenstapel ist aus zwei Sorten von Scheiben aufgebaut, die jeweils abwechselnd angeordnet und so ausgebildet sind, dass sie beim Antrieb durch eine am Außenumfang mit Zähnen versehene Zahnstange 11 mit unterschiedlicher Geschwindigkeit und um unterschiedlicher Achsen gedreht werden, wie dies im Einzelnen in der europäischen Patentanmeldung 04 016 525.0 beschrieben ist, auf die insoweit ausdrücklich verwiesen wird. Dort ist beispielhaft in Fig. 9 ein vergleichbares zylinderförmiges Gehäuse mit darin angeordneten Scheibenstapel dargestellt, dessen Antrieb anhand von Fig. 6 beschrieben ist und der vorliegenden Anordnung im Wesentlichen entspricht.

Jedenfalls sind die Scheiben 10 innerhalb des Gehäuses 1 drehbar angeordnet, der Antrieb erfolgt über die sich über im Wesentlichen die gesamte Länge des Gehäuses 1 erstreckende Zahnstange 11, die in Außenverzahnungen der einen der beiden Scheibensorten eingreift. Durch zentrale Durchbrechungen 20 der Scheiben 10 ist ein Rohr 12 geführt, welches Ausnehmungen aufweist und nicht nur zur Abfuhr der durch den Scheibenstapel radial von außen nach innen strömenden Flüssigkeit dient, sondern darüber hinaus auch ein Gegenlager zur Zahnstange 12 bildet. Dieses Rohr 12 hat einen deutlich geringeren Durchmesser als die zentralen Durchbrechungen 20 in den Scheiben 10, so dass die Scheiben 10 des Scheibenstapels auf diesem Rohr 12 und somit nicht um ihre zentrale Achse abrollen. Auch dieser Effekt ist im Einzelnen in der europäischen Patentanmeldung 04 016 525.0 beschrieben, auf die insoweit verwiesen wird.

Das Gehäuse 1 ist in bestimmungsgemäßer Anordnung so ausgerichtet, dass die Gehäuselängsachse im Wesentlichen horizontal angeordnet ist. Das innerhalb des Gehäuses 1 befindliche und zu reinigende Abwasser füllt das Gehäuseinnere nicht vollständig aus sondern nur bis zu einem Niveau 13, der darüber befindliche Raum ist mit Gas gefüllt. Der Scheibenstapel ist innerhalb des Gehäuses nicht nur radial sondern auch axial abgestützt. Das darin befindliche Abwasser wird so umgewälzt, dass es am Außenumfang des Scheibenstapels einströmt, radial zwischen den Scheiben 10 vorbeiströmt und durch die zentrale Ausnehmung 20 bzw. das Rohr 12 wieder abgeführt wird, so wie es in Fig. 1 durch die Pfeildarstellungen angedeutet ist.

Um den für die Umwälzung und die Zu- bzw. Abfuhr des Wassers erforderlichen Differenzdruck aufzubauen ist eine Umwälzpumpe 14 vorgesehen die im Deckel 4 integriert ist. Die Umwälzpumpe 14 ist als Kreiselpumpe ausgebildet und weist ein Kreiselrad 15 auf, das innerhalb des Deckels 4 angeordnet ist, so dass der Deckel 4 auch das Pumpengehäuse bildet. Das Kreiselrad 15 wird von einem Deckelzwischenteil 6b radial umgeben, der bei der dargestellten Ausführungsform mit einem Deckelinnenteil 6a einstückig ausgebildet ist, welcher den Deckelzwischenteil 6b zum Gehäuseinneren hin abschließt und den Saugmund 16 der Pumpe bildet.

Nach innen hin ist zwischen dem Saugmund 16 der Pumpe und dem Scheibenstapel eine Dichtung 17 vorgesehen, welche ein Überströmen zwischen Saug- und Druckseite der Pumpe verhindert. In dem durch das Bauteil 6 gebildeten Zwischenteil 6b ist eine Gehäuseschnecke, also ein die radial vom Kreiselrad ausgehende druckseitige Strömung umlenkender Kanal 18 vorgesehen und ein in Strömungsrichtung sich daran anschließender Ejektor 19, der ebenfalls innerhalb des Zwischenteils 6b ausgebildet ist und in einen Diffusor 20 mündet, der über eine Querausnehmung 21, welcher den Deckelinnenteil 6a durchsetzt, jenseits der Dichtung 17 unterhalb des Niveaus 13 mit dem Gehäuseinneren leitungsverbunden ist.

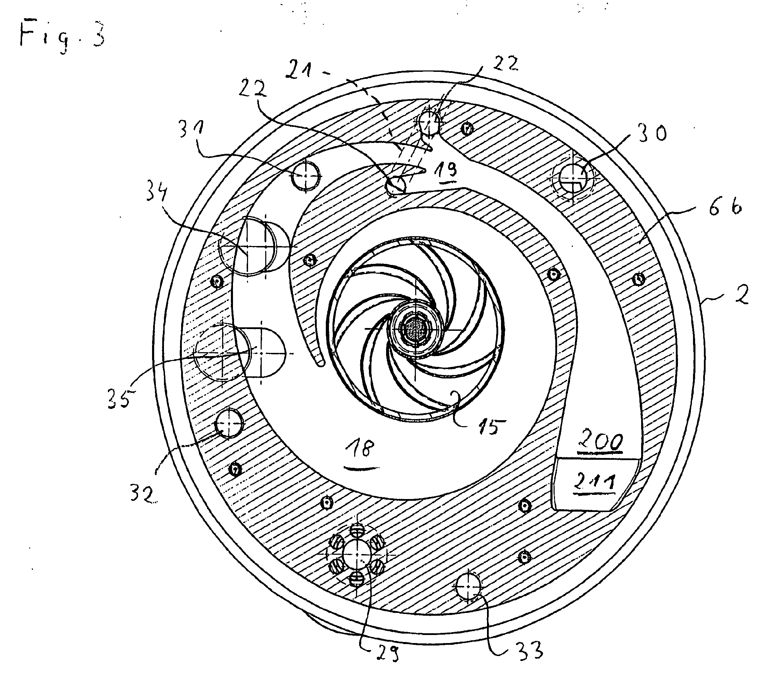

Den saugseitigen Teil des Ejektors 19 bildet ein u-förmiger Kanal 21, der in Fig. 3 in unterbrochenen Linien dargestellt ist und im Ejektor 19 an zwei Einlässen 22 mündet. Der u-förmige Kanal 21 ist über einen Kanal 23, welcher das Bauteil 6 durchsetzt, mit dem Gehäuseinneren, und zwar oberhalb des Wasserniveaus 13, also im Bereich der Gasblase verbunden und über einen fluchtend dazu im Deckelaußenteil 5 angeordneten Kanal 23' mit der Umgebung. Der Kanal 23' ist zum Anschluss einer Leitung vorgesehen, die zu einem Gasreservoir, hier einer Sauerstoffdruckflasche führt. Über den Kanal 23' kann also dem System Sauerstoff zugeführt werden. Im Ejektor 19 wird also während des Pumpbetriebs entweder über den Kanal 23' Sauerstoff aus der Druckflasche oder über den Kanal 23' Gas aus dem Gehäuse in den druckseitigen Flüssigkeitsstrom eingeleitet, und zwar mittels des u-förmigen Kanals 21 über die Einlassöffnungen 22.

Das Laufrad 15 der Kreiselpumpe sitzt auf einer Welle 24, die von einem Antriebsmotor 25 angetrieben ist, der in einer Ausnehmung im Deckelaußenteil 5 eingegliedert und dort lösbar befestigt ist. Die das Kreiselrad 15 tragende Welle 24 ist gegenüber dem Motor abgedichtet, der Motor 25 als Trockenläufer ausgebildet. Es kann jedoch alternativ auch ein Nasslaufmotor eingesetzt werden, dann erfolgt die Abdichtung zum Motor im Wesentlichen über den Spaltrohrtopf.

Der Deckel 4 weist in seinem in Fig. 1 unterem Bereich noch eine Ausnehmung für den Antriebe der Zahnstange 1 auf. Hierzu ist im Bauteil 6 eine Wellendurchführung 29 vorgesehen, welche abgedichtet ausgebildet ist. Das eine Ende dieser Welle 26 ist mit der Zahnstange 11 verbunden, dass andere Ende mit einer Kupplung, über welches die ausgangsseitige Welle eines Schneckengetriebes 27 angeschlossen ist, dessen Eingangswelle mit der Antriebswelle eines Motors 28 verbunden ist, der über das Getriebe 27 zusammen mit diesem am Deckel 4, insbesondere am Deckelteil 5 befestigt ist und für den Drehantrieb der Zahnstange 11 sorgt. Wie aus Fig. 1 ersichtlich ist, liegen die elektrischen Anschlüsse von Antriebsmotor 25 und Motor 28 außerhalb des Gehäuses und räumlich einander zugeordnet, so dass die elektrische Versorgung der Vorrichtung von einer Seite aus erfolgen kann.

In dem Deckel 4 sind nicht nur alle elektrischen Aggregate der Vorrichtung vereint, sondern auch die zum Betrieb erforderliche Sensorik. So ist innerhalb einer Bohrung 30 des Bauteils 6 ein Niveausensor angeordnet, welcher zur Füllstandsregelung der Vorrichtung benötigt wird, um einerseits sicherzustellen, dass der Scheibenstapel vollständig in Flüssigkeit eingetaucht ist und andererseits ausreichend Freiraum für die im oberen Bereich des Gehäuses befindliche Gasblase vorhanden ist. Die Bohrung 30 durchsetzt den Deckel 4, so dass der Sensor von außen einsetzbar und elektrisch anschließbar ist.

Weiterhin ist im Deckelaußenteil 5 eine Bohrung 31 vorgesehen, welche dieses durchsetzt und im Druckkanal 18 in Strömungsrichtung vor dem Ejektor 19 mündet. Diese Bohrung 31 dient zur Eingliederung eines Drucksensors zur Erfassung des Drucks auf der Druckseite der Pumpe. Der saugseitige Druck wird mittels eines in den Zeichnungen nicht dargestellten Rohres erfasst, das im Bereich des Saugmunds der Pumpe mündet und über eine den Deckel 4 durchsetzende Bohrung 32 angeschlossen ist. In diesem Rohr ist ebenfalls ein Drucksensor vorgesehen, so dass mit Hilfe der beiden Drucksensoren der Differenzdruck der Pumpe erfassbar ist.

Weiterhin ist im unteren Bereich des Deckels 4 eine Gewindebohrung 33 vorgesehen, welche im Betrieb mit einer Schraube dicht abgeschlossen ist. Diese Schraube dient als Ablassschraube, nach deren Entfernung die Flüssigkeit aus dem Gehäuse 1 ausströmen kann.

An der Außenseite des Deckels 4, insbesondere des Deckelaußenteils 5 sind zwei in den Zeichnungen nicht sichtbare Leitungsanschlüsse vorgesehen, welche in Ausnehmungen 34 und 35 des Deckelaußenteils 5 münden. Diese Ausnehmungen 34 und 35 durchsetzen das Deckelau-ßenteil 5 kanalartig und münden im Deckelzwischenteil 6b innerhalb des Druckkanals 18, und zwar in Strömungsrichtung gesehen zuerst die Ausnehmung 35 und dahinter die Ausnehmung 34. Die Ausnehmung 35 dient zur Entnahme des in der Vorrichtung gereinigten Wassers während die Ausnehmung zur Zufuhr von in der Vorrichtung zu reinigenden Rohwassers vorgesehen ist.

Bei der vorbeschriebenen Ausführung sind somit sämtliche elektrischen, Sensor- und Leitungsanschlüsse innerhalb des Deckels 4 integriert oder an diesem angeordnet. Der Deckel 4 ist bei der vorbeschriebenen Ausführungsform aus zwei Bauteilen 5 und 6 gebildet, die hinterschneidungsfrei ausgebildet sind und damit fertigungstechnisch günstig, beispielsweise durch Fräsen/Bohren aus einer Scheibe Rundmaterial herstellbar sind. Dabei kann das Bauteil 6 auch aus zwei Einzelbauteilen 6a und 6b bestehen, die dicht und fest aneinander anliegen.

**Bezugszeichenliste**

| | |
|---|---|
| 1 | - Gehäuse |
| 2 | - Rohrabschnitt |
| 3 | - rechter Deckel (Fig. 2) |
| 4 | - linker Deckel (Fig. 1) |
| 5 | - Deckelaußenteil |
| 6 | - Zwischen- und Deckelinnenteil |
| 6a | - Deckelinnenteil |
| 6b | - Deckelzwischenteil |
| 7 | - Dichtung |
| 8 | - Spannband |
| 9 | - Nut |
| 10 | - Scheiben |
| 11 | - Zahnstange |
| 12 | - Rohr |
| 13 | - Flüssigkeitsniveau |
| 14 | - Umwälzpumpe |
| 15 | - Kreiselrad |
| 16 | - Saugmund |
| 17 | - Dichtung |
| 18 | - Kanal |
| 19 | - Ejektor |
| 20 | - Durchbrechungen in den Scheiben |
| 211 | - u-förmiger Kanal |
| 22 | - Einlässe |
| 23, 23' | - Kanal |
| 24 | - Welle der Pumpe |
| 25 | - Antriebsmotor |
| 26 | - Welle |
| 27 | - Schneckengetriebe |
| 28 | - Motor |
| 29 | - Wellendurchführung |
| 30, 31, 32 | - Bohrung |
| 33 | - Gewindebohrung |
| 34, 35 | - Ausnehmungen |
| 200 | - Diffusor |
| 211 | Querausnehmung |

## Patentansprüche

1. Vorrichtung zur Fluidbehandlung, insbesondere Abwasserbehandlung, mit einer Umwälzpumpe und einem geschlossenen, rohrförmig ausgebildeten Gehäuse (1), in dem mindestens ein von Abwasser durchströmbarer Scheibenstapel angeordnet ist, wobei das Gehäuse (1) mit dem darin befindlichen Scheibenstapel und die Umwälzpumpe eine bauliche Einheit bilden, **dadurch gekennzeichnet, dass** die Umwälzpumpe in oder an einer Querwand (4) des Gehäuses (1) angeordnet und zumindest ein Teil der Pumpe integraler Bestandteil des Gehäuses (1) ist, wobei die Querwand (4) durch einen das Gehäuse (1) stirnseitig abschließenden Deckel (4) gebildet ist, an dessen Außenseite der die Pumpe antreibende Motor (25) angeordnet ist, dass der Deckel (4) mehrteilig ausgebildet ist, einen das Gehäuse (1) nach außen abschließenden äußeren Deckelteil (5) sowie einen den Deckel (4) nach innen abschließenden inneren Deckelteil (6a) aufweist, die miteinander verbunden sind und dass zwischen dem Deckelinnenteil (6a) und dem Deckelaußenteil (5) ein Zwischenteil (6b) vorgesehen ist, welches ein Kreiselrad (15) der Pumpe umgibt und in dem der druckseitige Strömungskanal (18) der Pumpe liegt.

2. Vorrichtung nach Anspruch 1, **dadurch gekennzeichnet, dass** ein außerhalb des Gehäuses (1) angeordneter Antriebsmotor (28) für den rotatorischen Antrieb des Scheibenstapels vorgesehen ist, wobei die Antriebswelle (26) durch den Deckel (4) geführt ist, in dem die Umwälzpumpe angeordnet ist.

3. Vorrichtung nach Anspruch 1 oder 2, **dadurch gekennzeichnet, dass** der Deckelinnenteil (6a) den Saugmund (16) der Pumpe bildet.

4. Vorrichtung nach einem der vorangehenden Ansprüche, **dadurch gekennzeichnet, dass** Deckelinnenteil (6a) und Zwischenteil (6b) einstückig ausgebildet sind.

5. Vorrichtung nach einem der vorangehenden Ansprüche, **dadurch gekennzeichnet, dass** der Zwischenteil (6a) einen Ejektor (19) aufweist, mit welchen dem druckseitigen Kanal (18)der Pumpe Gas zumischbar ist.

6. Vorrichtung nach Anspruch 5, **dadurch gekennzeichnet, dass** der Ejektor (19) einen ersten durch den Deckelinnenteil (6a) verlaufenden und in das Gehäuse (1) führenden Gaskanal (23) und vorzugsweise einen zweiten durch den Deckelaußenteil (5) verlaufenden und nach außerhalb des Gehäuses (1) führenden Gaskanal (23') aufweist.

7. Vorrichtung nach Anspruch 5 oder 6, **dadurch gekennzeichnet, dass** das Gehäuse (1) mit seiner Mittellängsachse etwa horizontal angeordnet ist und dass der zum Ejektor (19) führende und durch den Deckelinnenteil (6a) verlaufende Kanal (23) oben im Gehäuse (1) mündet.

8. Vorrichtung nach einem der Ansprüche 5 bis 7, **dadurch gekennzeichnet, dass** der Deckelinnenteil (6a) einen Kanal (21) aufweist, welcher das Gehäuseinnere mit der Druckseite der Umwälzpumpe verbindet und dass dieser Kanal (21) innerhalb des Gehäuses (1) unter dem zum Ejektor (19) führenden Kanal (23) und mit Abstand zum Saugmund (16) der Pumpe mündet.

9. Vorrichtung nach einem der vorangehenden Ansprüche, **dadurch gekennzeichnet, dass** die den Deckel (4) bildenden Bauteile (5, 6a, 6b) hinterschneidungsfrei, vorzugsweise als Frästeile oder kernlos herzustellende Gussteile ausgebildet sind.

10. Vorrichtung nach einem der Ansprüche 5 bis 9, **dadurch gekennzeichnet, dass** in Strömungsrichtung der Pumpe im Druckkanal (18) ein Auslasskanal (35) und dahinter ein Einlasskanal (34) vor dem Ejektor (19) münden

## Claims

1. A device for fluid treatment, in particular waste water treatment, with a circulation pump and a closed housing (1) which is designed in a tubular manner and in which at least one disk stack, through which waste water can flow is arranged, wherein the housing (1) with the disk stack located therein and the circulation pump form a construction unit, **characterised in that**
the circulation pump is arranged in or on a transverse wall (4) of the housing (1), and at least a part of the pump is an integral component of the housing (1), wherein the transverse wall (4) is formed by a cover (4) which closes the housing (1) at the end face and on whose outer side the motor (25) driving the pump is arranged, that the cover (4) is designed of several parts and comprises an outer cover part (5) closing the housing (1) to the outside, as well as an inner cover part (6a) closing the cover (4) to the inside, wherein these cover parts are connected to one another and that an intermediate part (6b) is provided between the cover inner part (6a) and the cover outer part (5), said intermediate part surrounding an impeller (15) of the pump, and in which intermediate part the pressure-side flow channel (18) of the pump lies.

2. A device according to claim 1, **characterised in that** a drive motor (28) arranged outside the housing (1) is provided for the rotary drive of the disk stack, wherein the drive shaft (26) is led through the cover (4), in which the circulation pump is arranged.

3. A device according to claim 1 or 2, **characterised in that** the cover inner part (6a) forms the suction port (16) of the pump.

4. A device according to one of the preceding claims, **characterised in that** the cover inner part (6a) and the intermediate part (6b) are designed as one piece.

5. A device according to one of the preceding claims, **characterised in that** the intermediate part (6a) comprises an ejector (19), with which gas may be admixed to the pressure-side channel (18) of the pump.

6. A device according to claim 5, **characterised in that** the ejector (19) comprises a first gas channel (23) running through the cover inner part (6a) and leading into the housing (1), and preferably a second gas channel (23') running through the cover outer part (5) and leading to outside the housing (1).

7. A device according to claim 5 or 6, **characterised in that** the housing (1) with its middle longitudinal axis is arranged roughly horizontally, and that the channel (23) leading to the ejector (19) and running through the cover inner part (6a) runs out in the housing (1) at the top.

8. A device according to one of the claims 5 to 7, **characterised in that** the cover inner part (6a) comprises a channel (21), which connects the inside of the housing to the pressure side of the circulation pump, and that this channel (21) runs out within the housing (1) below the channel (23) leading to the ejector (19) and at a distance to the suction port (16) of the pump.

9. A device according to one of the preceding claims, **characterised in that** the components (5, 6a, 6b) forming the cover (4) are free of undercuts, preferably are formed as milled parts or cast parts to be manufactured without a core.

10. A device according to one of the claims 5 to 9, **characterised in that** in the flow direction of the pump, an outlet channel (35) and downstream an inlet channel (34) run out upstream of the ejector (19), in the pressure channel (18).

## Revendications

1. Appareil pour le traitement de fluides, en particulier pour le traitement des eaux usées, comprenant une pompe de circulation et un corps (1) fermé de forme tubulaire dans lequel est disposée au moins une pile de disques qui peut être traversée par les eaux usées, le corps (1) formant une unité structurale avec la pile de disques qui se trouve à l'intérieur et avec la pompe de circulation, **caractérisé en ce que** la pompe de circulation est disposée dans ou contre une paroi transversale (4) du corps (1) et **en ce qu'**au moins une partie de la pompe fait partie intégrante du corps (1), la paroi transversale (4) étant formée par un couvercle (4) qui ferme le corps (1) côté frontal, et à la face extérieure duquel est monté le moteur (25) qui entraîne la pompe, **en ce que** le couvercle (4) est construit en plusieurs pièces, et présente une partie extérieure de couvercle (5) qui ferme le corps (1) vers l'extérieur, ainsi qu'une partie intérieure de couvercle (6a) qui ferme le couvercle (4) vers l'intérieur, lesquelles sont reliées ensemble, et **en ce qu'**entre la partie intérieure de couvercle (6a) et la partie extérieure de couvercle (5) est prévue une partie intermédiaire (6b) qui entoure une roue centrifuge (15) de la pompe et dans laquelle se trouve le canal d'écoulement côté pression (18) de la pompe.

2. Appareil selon la revendication 1, **caractérisé en ce qu'**il est prévu un moteur d'entraînement (28) disposé à l'extérieur du corps (1) pour l'entraînement en rotation de la pile de disques, l'arbre d'entraînement (26) étant guidé à travers le couvercle (4) dans lequel la pompe de circulation est montée.

3. Appareil selon la revendication 1 ou 2, **caractérisé en ce que** la partie intérieure de couvercle (6a) forme la bouche d'aspiration (16) de la pompe.

4. Appareil selon l'une des revendications précédentes, **caractérisé en ce que** la partie intérieure de couvercle (6a) et la partie intermédiaire (6b) sont réalisées d'une seule pièce.

5. Appareil selon l'une des revendications précédentes, **caractérisé en ce que** la partie intermédiaire (6a) présente un éjecteur (19) au moyen duquel du gaz peut être mélangé au canal côté pression (18) de la pompe.

6. Appareil selon la revendication 5, **caractérisé en ce que** l'éjecteur (19) présente un premier canal de gaz (23) qui s'étend à travers la partie intérieure de couvercle (6a) et débouche dans le corps (1), et de préférence un deuxième canal de gaz (23') qui s'étend à travers la partie extérieure de couvercle (5) et qui conduit à l'extérieur du corps (1).

7. Appareil selon la revendication 5 ou 6, **caractérisé en ce que** le corps (1) est disposé de façon à ce que son axe longitudinal central soit à peu près horizontal et **en ce que** le canal (23) qui conduit à l'éjecteur (19) et qui passe à travers la partie intérieure de couvercle (6a) débouche en haut dans le corps (1).

8. Appareil selon l'une des revendications 5 à 7, **caractérisé en ce que** la partie intérieure de couvercle (6a) présente un canal (21) qui relie le volume intérieur du corps au côté pression de la pompe de circulation et **en ce que** ce canal (21) débouche à l'intérieur du corps (1) au-dessous du canal (23) qui conduit à l'éjecteur (19) et à distance de la bouche d'aspiration (16) de la pompe.

9. Appareil selon l'une des revendications précédentes, **caractérisé en ce que** les éléments (5, 6a, 6b) qui forment le couvercle (4) sont réalisés sans contre-dépouille, de préférence sous la forme de pièces fraisées ou de pièces de fonderie à fabriquer sans noyau.

10. Appareil selon l'une des revendications 5 à 9, **caractérisé en ce que**, dans le sens de l'écoulement de la pompe, débouchent dans le canal de pression (18) devant l'éjecteur (19) un canal de sortie (35) puis derrière un canal d'entrée (34).
